# EUROPEAN PATENT APPLICATION

(11) **EP 3 349 159 A1**
(43) Date of publication of application: **18.07.2018**
(21) Application number: 17189713.5
(22) Date of filing: 06.09.2017
(51) Int. Cl.: G06Q 10/10, G07C 9/00, F24F 11/00, G01J 5/00

(54) **SMART ROOM ALLOCATION**

(30) Priority: 13.01.2017 EP 17151510
(71) Applicant: Siemens Schweiz AG, 8047 Zürich (CH)
(72) Inventor: Koitz, Irina, 8050 Zürich (CH); Rautavaara, Marjut, 6345 Neuheim (CH)
(74) Representative: Maier, Daniel Oliver

(57) **Abstract**

Method and system for allocating a room, especially a meeting room, in one or more buildings, wherein information regarding rooms is provided to a room allocation system, wherein the information regarding rooms comprises the availability of rooms, the capacity of the rooms, and the infrastructure of the rooms; wherein information regarding a planned meeting is provided to the room allocation system, wherein the information regarding a planned meeting comprises the required time or timeframe, the required capacity, and the required infrastructure; wherein information regarding participants of a planned meeting is provided to the room allocation system, wherein the information regarding participants comprises name, contact information, availability, and comfort information for the respective participants; and wherein a compromise score is computed that gives the best suitable room to a group of participants, based on the information regarding rooms, based on the information regarding the planned meeting, and based on the comfort information of the respective participants by the room allocation system.

## Description

### Background

In today's office buildings, meeting room allocation is a significantly time-consuming, rigid and inefficient process, which often leads to frustrated meetings participants whose comfort and wellbeing requirements are not met.

Currently, most room booking systems (e.g., Microsoft Outlook - Calendar, Google Calendar, etc.) rely on a predefined set of data: list of rooms available in the building(s), their schedules (when they are available and when they are not, for what events they have been booked), tenants' or participants' information (name, contact details). When a tenant or participant wants to schedule a meeting occurring in the future, the tenant has to access the room booking system, usually through a calendar interface. There, the tenant or participant first navigates to the desired date and time, marks the slot to be booked, gives the meeting a name, and lists the participants invited to attend the meeting. Then, the tenant or participant has to choose a particular room for the meeting - for this, the tenant has to check which rooms are actually available during the chosen timeslot, which are large enough to accommodate the required number of participants, which have the needed equipment (e.g., projector, screen, smart board, etc). This step is extremely time-consuming and inefficient.

A major problem with this solution is that rooms are allocated in a thoroughly rigid way, and when, for example, a further participant is added to an already scheduled meeting and the new number of participants exceeds the room capacity, the room booking has to be cancelled and a new one has to be made following the steps above. Conversely, some of the invited participants may not accept the meeting invitation and too large rooms end up being booked for too few people, thus wasting space and resources. Naturally, such details are often overlooked, and large amounts of building space is largely misused, under- or over-utilized, leading to low comfort levels and increased unneeded resource consumption, e.g., energy.

Another major problem with this solution is that rooms allocated this way, without taking into account the environmental conditions that fit tenants' comfort and wellbeing requirements, usually leads to frustrated meeting participants, who do not feel comfortable in the working space or, often, whose general health and wellbeing are affected. Undoubtedly, this has a big impact on their productivity and outcome of their work. From an energy-consumption perspective, this current solution negatively influences the energy consumption targets, in that meeting participants who do not feel comfortable in the allocated rooms will try to alter the conditions by overwriting the set-points imposed by the building management/automation system, e.g., opening windows, turning up the heating or ventilation, etc.

### SUMMARY OF THE INVENTION

The object of the invention is to provide an efficient room allocation system, which optimizes the required space and the comfort of the participants.

An aspect of the invention is a method for allocating a room, especially a meeting room, in one or more buildings, the method comprising:
providing room information regarding a plurality of rooms to a room allocation system (e.g. computer system comprising adequate software programs), wherein the room information comprises an availability indicator for each of the rooms, a capacity for each of the rooms, infrastructure information for each of the rooms, and a environmental current condition (e.g., temperature, humidity, etc.) for each of the rooms;
providing planned meeting information regarding a planned meeting to the room allocation system, wherein the planned meeting information comprises a required time or timeframe, a required capacity, and a required infrastructure;
providing participant information regarding a plurality of participants of the planned meeting to the room allocation system, wherein the participant information comprises a name, contact information, an availability indicator, and environmental comfort preference information (e.g. temperature, brightness, or air quality preferences) for each of the respective participants;
generating or computing a compromise score corresponding to a best suitable room of the plurality of rooms based on the room information, the planned meeting information, and the participant information for each of the plurality of participants that accepted a meeting invitation by the room allocation system.

A further aspect of the invention is a computerized system for allocating a room, especially a meeting room, in one or more buildings, the system comprising:
a server, configured with hardware and software to act as a room allocating system,
   wherein the server is further configured to receive room information regarding a plurality of rooms in one or more buildings, wherein the room information comprises an availability indicator for each of the rooms, a capacity for each of the rooms, infrastructure information for each of the rooms, and a environmental current condition (e.g., temperature, humidity, etc.) for each of the rooms;
   wherein the server is further configured to receive planned meeting information regarding a planned meeting in one or more buildings, wherein the planned meeting information comprises a required time or timeframe, a required capacity, and a required infrastructure;
   wherein the server is further configured to receive participant information regarding a plurality of participants of the planned meeting, wherein the participant information comprises a name, contact information, an availability indicator, and environmental comfort preference information (e.g. temperature, brightness, or air quality preferences) for each of the respective participants; and
   wherein the server is further configured to generate a compromise score corresponding to a best suitable room of the plurality of rooms based on the room information, the planned meeting information, and the participant information for each of the plurality of participants that accepted a meeting invitation.

Another aspect of the invention is a server configured for allocating rooms, especially meeting rooms, in one or more buildings, the server comprising:
an interface, configured to
   - receive room information regarding a plurality of rooms in one or more buildings, wherein the room information comprises an availability indicator for each of the rooms, a capacity for each of the rooms, infrastructure information for each of the rooms, and a environmental current condition for each of the rooms;
   - receive planned meeting information regarding a planned meeting in one or more buildings, wherein the planned meeting information comprises a required time or timeframe, a required capacity, and a required infrastructure;
   - receive participant information regarding a plurality of participants of the planned meeting, wherein the participant information comprises a name, contact information, an availability indicator, and environmental comfort preference information for each of the respective participants;
an analytics engine configured to compute a
   compromise score corresponding to a best suitable room of the plurality of rooms based on the room information, the planned meeting information, and the participant information for each of the plurality of participants that accepted a meeting invitation; and
a sender module configured to send an identification of the allocated room to the computing devices (e.g. laptop, mobile communication device (e.g. smart phone)) of the participants.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates an exemplary flowchart for a method for allocating a room, especially a meeting room, in one or more buildings;
- FIG 2: illustrates a first exemplary computerized system for allocating a room, especially a meeting room, in one or more buildings;
- FIG 3: illustrates a second exemplary computerized system for allocating a room, especially a meeting room, in one or more buildings; and
- FIG 4: illustrates an exemplary server configured for allocating rooms, especially meeting rooms, in one or more buildings.

### DETAILED DESCRIPTION

An aspect of the invention is a new dynamic method for allocating rooms/office spaces, based on tenants' personal preferences that are inferred over time. This new approach has two major benefits: 1) reduces the time and effort when booking rooms by automating the overall room booking process, and 2) optimizes the room allocation to tenants, such that the rooms allocated satisfy their personal preferences in terms of comfort and wellbeing, e.g., room temperature, proximity/location, air quality, brightness, etc. This way, they do not have to make changes to the environment once they arrive in the booked room and the environment conditions stimulate their productivity.

The rooms available and participants' information are the two required categories of data needed when booking a room. In our approach, besides participants' names, contact information and availability, we add a new dimension: participants' preferences. Each person has their own preferences for comfort and wellbeing, most often represented by temperature, brightness, air quality preferences, but not limited to these. When taking humans' preferences into account, we have higher chances of allocating the right rooms to the right people, thus improving their comfort and wellbeing, which are directly linked to productivity.

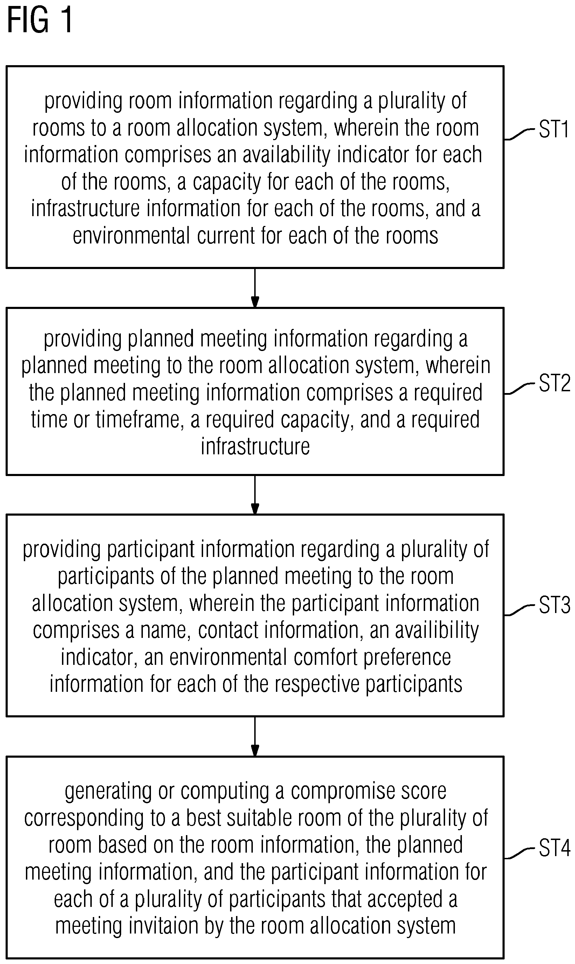

Figure 1 illustrates an exemplary flowchart for a method for allocating a room, especially a meeting room, in one or more buildings. The method comprising:
(ST1) providing room information regarding a plurality of rooms to a room allocation system (e.g. computer system comprising adequate software programs), wherein the room information comprises an availability indicator for each of the rooms, a capacity for each of the rooms, infrastructure information for each of the rooms, and a environmental current condition (e.g., temperature, humidity, etc.) for each of the rooms;
(ST2) providing planned meeting information regarding a planned meeting to the room allocation system, wherein the planned meeting information comprises a required time or timeframe, a required capacity, and a required infrastructure;
(ST3) providing participant information regarding a plurality of participants of the planned meeting to the room allocation system, wherein the participant information comprises a name, contact information, an availability indicator, and environmental comfort preference information (e.g. temperature, brightness, or air quality preferences) for each of the respective participants;
(ST4) generating or computing a compromise score corresponding to a best suitable room of the plurality of rooms based on the room information, the planned meeting information, and the participant information for each of the plurality of participants that accepted a meeting invitation by the room allocation system.

The method can be realized by software and hardware means which are commercially available as commercials off the shelf (COTS). The method can be easily implemented for new buildings, but also already existing buildings can easily be retrofitted.

Advantageously the required capacity is automatically determined based on meeting invitees' responses.

Advantageously the participant information regarding a planned meeting is provided (e.g. communicated) to the room allocation system just before the meeting (e.g., 30 minutes or one hour before the meeting).

The capacity for each of the rooms comprises for instance the total number of persons that can fit into the room, for example, based on a fire safety standard.

The "required capacity" of a room for the planned meeting that may correspond to a predetermined minimum number of persons for the planned meeting. The "required capacity" of a room for the planned meeting can also be to a predetermined maximum number of persons for a planned meeting.

An availability indicator for a room can be a flag (e.g. semaphore) indicating that the room is not occupied for a timeframe (specified year, day time period).

The room information, the planned meeting information, the participant information of a planned meeting can be provided by computing devices, which are available in the building (e.g. personal computer, workstation, laptops, tablet computer, smartphones) and/or communication devices (e.g. tablet computer, smartphones) of persons which can be potential participants of meetings.

It is important to know the current environmental conditions (e.g., temperature, humidity, etc.) in the rooms when allocating such that the best fitting rooms according to the compromise score are allocated. Furthermore, this can lead to energy consumption reductions, since the conditions in the room allocated already correspond to the preferences of meeting participants.

Computing or generating a compromise score can be realized by a computer (e.g. a server located onsite or in a cloud) or by a computer system having adequate memory, processing power, Input-/Output means (e.g. monitor, keyboard), and communication mechanisms (e.g. receiving and sending units), wherein the computer or computer system is configured to act as a room allocation or booking system. For example the compromise score can be determined by an analytics engine, for instance based on rule based reasoning. Computing a compromise score can also be performed by software programs based on deep learning (using, e.g., artificial neural networks, pattern analysis, supervised algorithms, or unsupervised algorithms). Deep learning can be implemented using artificial neural networks, pattern analysis, supervised or unsupervised learning algorithms.

Advantageously the computer (e.g. a server) sends the information regarding the best suitable room, means the room which was finally allocated, to computer devices and/or mobile devices (e.g. smartphones) of the participants. This can be accomplished via email, mobile email client notification and/or a messenger service (e.g. Windows Messenger Service or WhatsApp). Advantageously only the participants which have accepted the invitation will be informed regarding the best suitable room which is finally allocated.

An advantageous embodiment of the invention is, that the comfort information (e.g. the environmental comfort preference information (e.g. temperature, brightness, or air quality preferences)) for the respective participants is provided directly to the computer system (e.g. server) acting as room allocation system or room booking system (e.g. via the query for a room, or by the respective participant). This can be accomplished via Email and/or via a messenger service. Advantageously the information regarding comfort preferences is provided by building users through their personal profiles, e.g., on their building user apps.

An advantageous embodiment of the invention is, that the comfort information (e.g. the environmental comfort preference information) for a respective participant is provided by analyzing the interaction of the respective participant with the room setting equipment (e.g. setting a thermostat or a ventilation system). As people use a building and its offices or rooms, they interact with these and impact the conditions therein. For instance, when participant n attends a meeting in a room where the temperature is too high according to his/her personal needs, the participant will use the thermostat to change the temperature, increase the ventilation or open the window. Advantageously the interaction between participant n and the room is recorded in a data base (e.g. of a building controller or a building automation system), and advantageously each such data point is stored as an artificial neuron. Attached to this, the metadata expressing the existing conditions in the room before the human intervention are also stored.

An advantageous embodiment of the invention is, that a threshold for the compromise score is user defined (e.g. by a meeting room allocation manager). For example the threshold for the compromise score could be the arithmetic mean or average of collected historical data, or the median of collected historical data.

An advantageous embodiment of the invention is, that the threshold for the compromise score is adjusted according to the respective invited participants. Advantageously stored historical comfort data of the respective invited participants are taken into account. Also empirical comfort data of respective invited participants can be taken into account.

An advantageous embodiment of the invention is, that the step "generating or computing a compromise score" determines the optimum values to fit the largest population of participants. This ensures that the comfort settings of the allocated room fits to most of the participants.

An advantageous embodiment of the invention is, that the step "generating or computing a compromise score" uses a user defined weighting of types of comfort information (e.g. types of comfort information have different importance by computing a compromise score). For example, noise can have a bigger impact to the discomfort of some participants than temperature, while for others it can be the opposite.

An advantageous embodiment of the invention is, that a specific room is allocated shortly before the meeting starting time (e.g., one hour in advance). Advantageously also the compromise score is determined shortly before the meeting starting time (e.g., one hour in advance). This enables that the determined compromise score only takes into account the comfort data (or environmental comfort preferences) of those participants which have accepted to attend the meeting and ideally a room is allocated that already best fits the compromise score along with the other meeting room requirements (e.g., infrastructure).

An advantageous embodiment of the invention is, that a reminder regarding the scheduled meeting is sent to the participants, wherein the reminder comprises the identification data of the specific allocated room. In case a participant rejects the invitation, a new compromise score (without this participant) can be determined.

An advantageous embodiment of the invention is, that the step "generating or computing a compromise score" is based on deep learning, artificial neural networks, pattern analysis, supervised algorithms, or unsupervised algorithms. Deep learning can be implemented using artificial neural networks, pattern analysis, supervised or unsupervised learning algorithms. Computing a compromise score will be performed by running adequate software programs on a processor of a computer which is configured to execute machine learning algorithms. Deep learning or deep structured learning mechanisms are machine learning mechanisms which are based on learning data or on learning data representations. In the context of artificial neural networks deep learning or deep structured learning mechanisms can be performed supervised or unsupervised based on training or historical data. Advantageously the training data are labeled.

An advantageous embodiment of the invention is, that the method is realized in a cloud computing infrastructure. A cloud computing infrastructure provides an easy scalability and flexibility in regard to the number users (e.g. potential participants and/or buildings). Advantageously the computer system is realized in a cloud computing infrastructure, e.g. as SaaS (Software as a Service).

An advantageous embodiment of the invention is, that the threshold for the compromise score is adjusted according to the respective invited participants.

An advantageous embodiment of the invention is, that the step "generating or computing a compromise score" determines the optimum values to fit the largest population of participants who have accepted to attend the meeting.

An advantageous embodiment of the invention is, that the comfort information (e.g. the environmental comfort preference information) for the respective participants is provided directly to the allocation system or room booking system (e.g. via the query for a room, or by the participant).

An advantageous embodiment of the invention is, that the comfort information (e.g. the environmental comfort preference information) for the respective participants is provided by analyzing the interaction of a participant with the room setting equipment (e.g. setting a thermostat).

An advantageous embodiment of the invention is, that a threshold for the compromise score is user defined (e.g. by a meeting room allocation manager).

An advantageous embodiment of the invention is, that the threshold for the compromise score is adjusted according to the respective invited participants.

An advantageous embodiment of the invention is, that the step "generating or computing a compromise score" determines the optimum values to fit the largest population of participants.

An advantageous embodiment of the invention is, that the step "generating or computing a compromise score" uses a user defined weighting of types of comfort information (e.g. types of comfort information have different importance by computing a compromise score).

Further advantageous embodiments of the invention are a non-transient computer-readable medium (e.g. CD, SSD or USB stick) and a computer program product (e.g. a program module written in an adequate programming language, e.g. C++, Java) comprising instructions for performing the inventive method for allocating a room, especially a meeting room, in one or more buildings. The computer-readable medium and the computer program product having program segments for, when executed on a computer device, causing the computer device (e.g. workstation, desktop computer, laptop, tablet) to implement the inventive method. The computer program product is directly or indirectly loadable into the memory of a digital computer or controller. Computer readable media can be any available media that can be accessed by a computer. By way of example, and not limitation, computer readable media can exemplary comprise computer storage media and communication media. Computer storage media comprises volatile and non volatile as well as removable and non-removable media implemented in any method or technology for storage of information such as computer readable instructions, data structures, program modules or other data. Computer storage media for example comprises RAM, ROM, EEPROM, flash memory or other memory technology, CDROM, digital versatile disks (DVD) or other optical disk storage, or any other medium which can be used to store the desired information and which can be accessed by a computer.

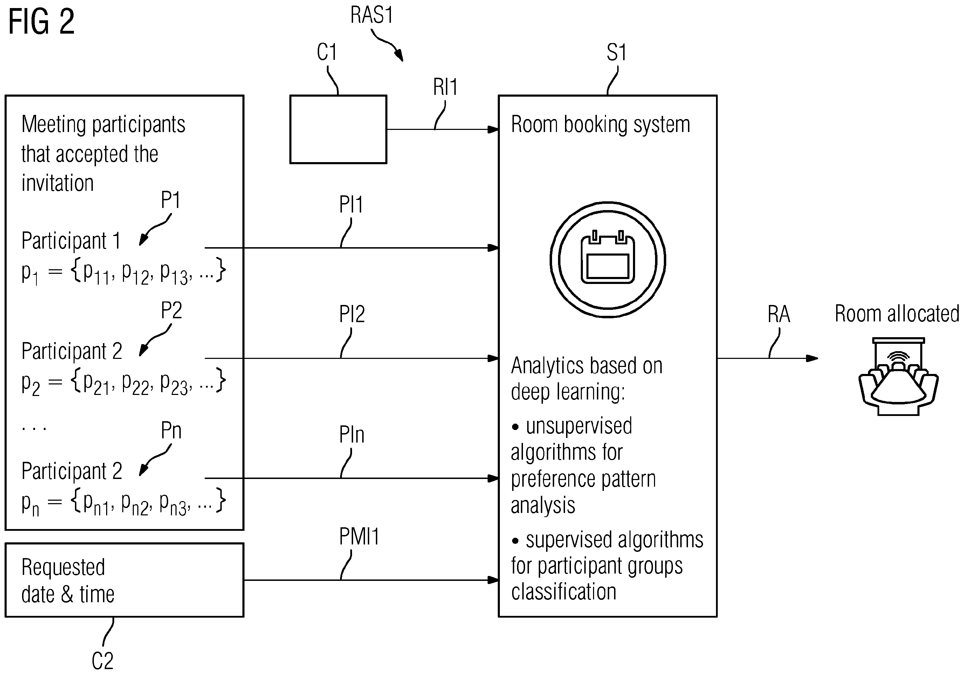

Figure 2 illustrates a first exemplary computerized system RAS1 for allocating a room, especially a meeting room, in one or more buildings. In the scenario illustrated in figure 2 the computerized system RAS1 comprises a server S1 which is acting as a room booking system. The server S1 comprises a memory unit, a processing unit, and communication mechanisms (advantageously wireless communication mechanisms) which are configured to act as a room booking system. The server S1 can be realized in a cloud infrastructure.

The server S1 receives from a computer C1 information RI1 (e.g., though a web-service interface) regarding rooms in the one or more buildings which are administrated by the computerized system S1. The information RI1 regarding rooms comprises the availability of rooms which is maintained realtime, the capacity of the rooms, and the infrastructure of the rooms. The computer C1 which is sending the information RI1 regarding rooms to the computerized system S1 can be every kind of computing device (e.g. laptop, workstation desktop computer, smartphone). Advantageously the computer C1 is operated by the administration (e.g. asset management and/or facility management) of the one or more buildings. Advantageously the computer C1 is part of a building management system operating the one or more buildings.

The server S1 receives from a computer C2 information PMI1 regarding a planned meeting. The information PMI1 regarding a planned meeting comprises the required time or timeframe, the required capacity, and the required infrastructure in the room. The computer C2 which is sending the information PMI1 regarding a planned meeting to the computerized system S1 can be every kind of computing device (e.g. laptop, workstation desktop computer, smartphone).

For instance the computer C2 can be the computing device of a secretary who is organizing a meeting or an event for dedicated participants.

The server S1 receives from the respective invited participants P1 - Pn of a planned meeting individual-related information PI1 - Pin, e.g., though a building user app where the meeting participant can input his/her preferences in a personal profile. The information PI1 - PIn comprises name, contact information, availability, and comfort information (e.g. preferred room temperature (e.g. 18⁰ - 22⁰ degree centigrade, preferred ventilation (e.g. not sitting in flow of air) for the respective participants P1 - Pn in each case.

The server S1 uses an analytics engine based on machine learning algorithms (e.g. deep learning, artificial neural networks, pattern analysis, supervised algorithms, or unsupervised algorithms) to compute a compromise score for the participants who accepted to attend the meeting. Deep learning can be implemented using artificial neural networks, pattern analysis, supervised or unsupervised learning algorithms. The room RA which fits for most of the participants according to the compromise score is allocated. The information regarding the allocated room RA (location: room number, floor, building, etc.) is sent to the participants P1 - Pn. Advantageously computing the compromise score for the participants is performed shortly before the scheduled time of the meeting (e.g. 1 hour before). This enables that only those participants who accepted to attend (means who will really show up in the meeting) are taken into account when computing the compromise score. Advantageously the computerized system S1 is realized in a cloud infrastructure.

Figure 2 describes an exemplary room booking and allocation scenario, e.g. for an office building. In principle the scenario described in figure 2 is also applicable for booking and allocating desks in open offices.

### Exemplary steps in an exemplary Scenario:

1. Each person using the exemplary room booking system S1 has the ability to specify his/her set of preferences. We encode these as pn, where n is an identifier for a particular person P1 - Pn, and p is the finite set of preferences. These preferences are given manually, e.g., ideal temperature for Participant n is 24C.
2. As people use a building and its offices, they interact with these and impact the conditions therein. For instance, when Participant n attends a meeting in a room where the temperature is too high according to his/her personal needs, (s)he will use the thermostat to change the temperature, increase the ventilation or open the window. The interaction between Participant n and the room is recorded, and each such data point is stored as an artificial neuron. Attached to this, the metadata expressing the existing conditions in the room before the human intervention are also stored.
3. All these types of preferences, both those manually given (1) and the ones resulting from interventions on room conditions (2) are sent to the room booking system as input pn for Participant n.
4. The requested data and time are also input into the room booking system S1.
5. The room booking system S1 is linked to an analytics engine which computes the actual preferences for each participant - these are a set of resulting interpolated values from those manually given and those inferred over time (e.g., months, years) based on the interactions of the participant with the rooms (s)he used. Each intervention of a participant to room conditions over time is an artificial neuron, which represents an input for the artificial neural network. For computing the actual preferences, we employ deep learning using (i) unsupervised algorithms for preference pattern analysis, i.e. patterns of participants' preferences, and (ii) supervised algorithms for participant group classification. The latter algorithms category is essential for computing a compromise score that gives the right room to a group of people, based on all their preferences. For instance, when having multiple meeting participants, individual preferences with regard to different comfort and wellbeing characteristics may vary, and through classification we determine the optimum values to fit the largest population.
6. It is essential to note that our approach does not allocate a specific room when the meeting is scheduled. The actual meeting room is allocated shortly before the meeting starting time (e.g., one hour in advance), by when participants will have accepted or rejected the invitation. This way, space optimization is taken into account and the room booking system chooses the right room size. At this point, the optimum conditions for all participants who have accepted the meeting are calculated by the analytics engine, and the best fitting room is allocated. When participants P1 - Pn receive a reminder for the meeting, this also includes the room allocated.

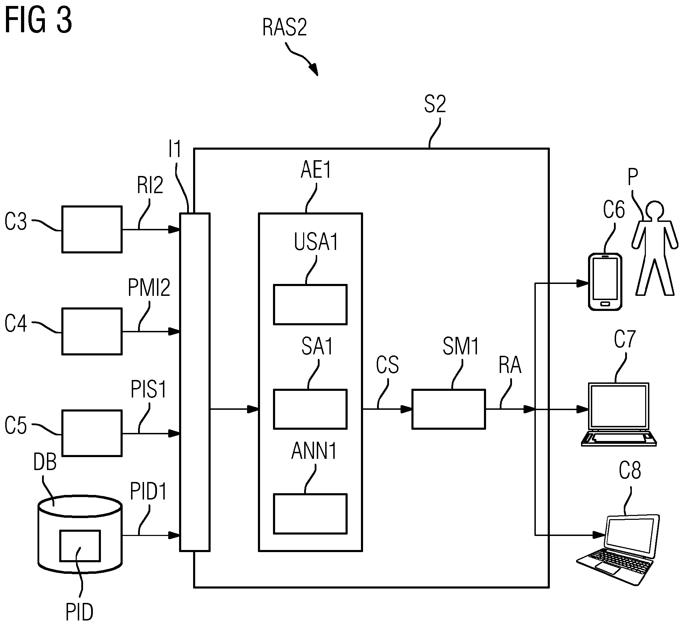

Figure 3 illustrates a second exemplary computerized system RAS2 for allocating a room, especially a meeting room, in one or more buildings. The second exemplary computerized system RAS2 comprises:
a server S2, configured with hardware and software to act as a room allocating system,
   wherein the server S2 is further configured to receive information RI2 regarding rooms in one or more buildings, wherein the information RI2 regarding rooms comprises: availability of the rooms, capacity of the rooms, infrastructure of the rooms, and the current conditions in the rooms (e.g., temperature, humidity, etc.);
   wherein the server S2 is further configured to receive information PMI2 regarding a planned meeting in one or more buildings, wherein the information PMI2 regarding a planned meeting in one or more buildings comprises required time, required capacity, and required infrastructure;
   wherein the server S2 is further configured to receive information PIS, PID regarding participants, wherein the information PIS, PID regarding participants comprises: name, contact information, availability, and comfort information for the respective participant; and
   wherein the server S2 is further configured to compute a compromise score CS that gives the best suitable room to a group of participants, based on the information RI2 regarding rooms, based on the information PMI2 regarding the planned meeting, and based on the information PIS, PID, especially comfort information, of the respective participants.

Advantageously the exemplary computerized system RAS2 for allocating a room, especially a meeting room, in one or more buildings further comprises a computer device C3 for sending information RI2 regarding rooms to the server S2.

Advantageously the exemplary computerized system RAS2 for allocating a room, especially a meeting room, in one or more buildings further comprises a computer device C4 for sending information PMI2 regarding a planned meeting in one or more buildings to the server S2.

Advantageously the exemplary computerized system RAS2 for allocating a room, especially a meeting room, in one or more buildings further comprises a communication device C5, DB for sending information PIS, PID regarding participants to the server S2. The information PIS, PID regarding participants can be static information PIS or dynamic information PID. The static information PIS can be provided to the server S2 for instance by registering the participant to the computerized room allocation system RAS2. The static information PIS can be provided to the server S2 by analyzing the interaction of the respective participant with the room setting equipment (e.g. setting a thermostat or a ventilation system). As people use a building and its offices or rooms, they interact with these and impact the conditions therein. For instance, when participant n attends a meeting in a room where the temperature is too high according to his/her personal needs, the participant will use the thermostat to change the temperature, increase the ventilation or open the window. Advantageously the interaction between a participant and the room is recorded in a data base DB (e.g. of a building controller or a building automation system), and advantageously each such data point is stored as an artificial neuron. Attached to this, the metadata expressing the existing conditions in the room before the human intervention are also stored.

The server S2 comprises an interface I1 to receive the information RI2 regarding rooms, the information PMI2 regarding a planned meeting, and the information PIS, PID regarding participants. Advantageously the interface I1 is configured to receive this information wireless (e.g. via WLAN).

The server S2 receives via the interface I1 from a computer C3 information RI2 regarding rooms in the one or more buildings which are administrated by the computerized system S2. The information RI2 regarding rooms comprises the availability of rooms, the capacity of the rooms, and the infrastructure of the rooms. The computer C3 which is sending the information RI2 regarding rooms to the server S2 can be every kind of computing device (e.g. laptop, workstation desktop computer, smartphone). Advantageously the computer C3 is operated by the administration (e.g. asset management and/or facility management) of the one or more buildings. Advantageously the computer C3 is part of a building management system operating the one or more buildings.

The server S2 receives from a computer C4 information PMI2 regarding a planned meeting. The information PMI2 regarding a planned meeting comprises the required time or timeframe, the required capacity, and the required infrastructure in the room. The computer C4 which is sending the information PMI2 regarding a planned meeting to the server S2 can be every kind of computing device (e.g. laptop, workstation desktop computer, smartphone).

For instance the computer C4 can be the computing device of a secretary who is organizing a meeting or an event for dedicated participants.

Advantageously the server S2 communicates with the computing devices C3 to C8 or the data base server DB via wireless communication mechanisms (e.g. radio, WLAN, Internet). Advantageously the communication mechanisms are bidirectional. This allows the server S2 to provide feedback to the computing devices C3 to C5 or DB in response to received information RI2, PMI2, PIS1, PID1. The sender module SM1 can send the information regarding an allocated room RA to the participants P e.g. via email, SMS, social media, or messenger service (e.g. WhatsApp).

The server S2 receives from the respective invited participants P of a planned meeting individual-related information PIS, PID. The information PIS, PID comprises name, contact information, availability, and comfort information (e.g. preferred room temperature (e.g. 18⁰ - 22⁰ degree centigrade, preferred ventilation (e.g. not sitting in flow of air) for the respective participants P in each case. The information PIS, PID regarding participants can be static information PIS (e.g. name. contact information (e.g. email address) or dynamic information PID (derived comfort information of a respective participant by logging and analyzing interaction of the respective participant with room controllers (e.g. thermostats).

The server S2 uses an analytics engine AE1 comprising machine learning algorithms (e.g. deep learning, artificial neural networks ANN1, pattern analysis, supervised algorithms SA1, or unsupervised algorithms USA1) to compute a compromise score CS for the participants who accepted to attend the meeting. The room RA which fits for most of the participants according to the compromise score is allocated. The information regarding the allocated room RA (location: room number, floor, building, etc.) is sent to the participants P via a sender module SM1 (e.g. a WLAN module). Advantageously computing the compromise score for the participants is performed shortly before the scheduled time of the meeting (e.g. 1 hour before). This enables that only those participants P who accepted to attend (means the persons which will really show up in the meeting) are taken into account when computing the compromise score CS. Advantageously the computerized system S2 is realized in a cloud infrastructure, e.g. as SaaS (Software as a Service).

In the exemplary scenario illustrated in figure 3 the sender module SM1 of server S2 is sending the information regarding the allocated room RA to the exemplary computer device C6 (e.g. a smartphone of a user P), to the exemplary computer device C7 (e.g. a workstation or a PC), and to the exemplary computer device C8 (e.g. a laptop). Advantageously the server S2 is configured to send and to receive data or information via cable connection (e.g. LAN) and/or via wireless connections (e.g. WLAN).

A further embodiment of the invention is a computerized system RAS2 for allocating rooms, especially meeting rooms, in one or more buildings, the system RAS2 comprising:
a server S2, configured with hardware and software to act as a room allocating system,
   wherein the server S2 is further configured to receive room information RI2 regarding a plurality of rooms in one or more buildings, wherein the room information RI2 comprises an availability indicator for each of the rooms, a capacity for each of the rooms, infrastructure information for each of the rooms, and a environmental current condition for each of the rooms;
   wherein the server S2 is further configured to receive planned meeting information PMI2 regarding a planned meeting in one or more buildings, wherein the planned meeting information PMI2 comprises a required time or timeframe, a required capacity, and a required infrastructure;
   wherein the server S2 is further configured to receive participant information PIS1, PID1 regarding a plurality of participants of the planned meeting, wherein the participant information PIS1, PID1 comprises a name, contact information, an availability indicator, and environmental comfort preference information for each of the respective participants P; and
   wherein the server S2 is further configured to generate a compromise score CS corresponding to a best suitable room RA of the plurality of rooms based on the room information RI2, the planned meeting information PMI2, and the participant information PIS1 for each of the plurality of participants P that accepted a meeting invitation.

Advantageously the computerized system RAS2 further comprises a computer device C3 for sending room information to the server S2.

Advantageously the computerized system RAS2 further comprises communication devices C5, DB for sending participant information to the server S2.

The server S2 uses an analytics engine AE1 comprising machine learning algorithms (e.g. deep learning, artificial neural networks ANN1, pattern analysis, supervised algorithms SA1, or unsupervised algorithms USA1) to generate or compute a compromise score CS for the participants who accepted to attend the meeting. The room RA which fits for most of the participants according to the compromise score is allocated. The information regarding the allocated room RA (location: room number, floor, building, etc.) is sent to the participants P via a sender module SM1.

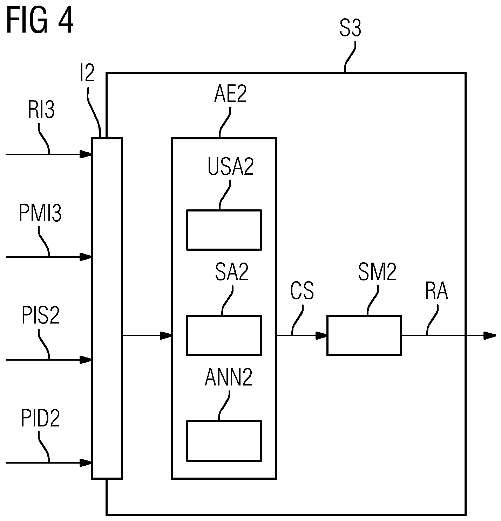

Figure 4 illustrates an exemplary server S3 configured for allocating rooms, especially meeting rooms, in one or more buildings (e.g. office buildings, hotels). The server S3 comprises:
- an interface I2, configured to
   - receive information RI3 regarding rooms in one or more buildings, wherein the information RI3 regarding rooms comprises: availability of the rooms, capacity of the rooms, infrastructure of the rooms, and the current conditions in the rooms (e.g., temperature, humidity, etc.);
   - receive information PMI3 regarding a planned meeting in one or more buildings, wherein the information PMI3 regarding a planned meeting in one or more buildings comprises required time, required capacity, and required infrastructure;
   - receive information PIS1, PIS2 regarding participants, wherein the information regarding participants PIS1, PIS2 comprises: name, contact information, availability, and comfort information for the respective participant;
- an analytics engine AE2 configured to compute a compromise score CS that gives the best suitable room to a group of participants, based on the information RI3 regarding rooms, based on the information PMI3 regarding the planned meeting, and based on the information PIS2, PID2, especially comfort information, of the respective participants which have accepted to attend the panned meeting; and
- a sender module SM2 to send an identification of the allocated room RA to the computing devices of the participants.

A further exemplary embodiment of a server S3 configured for allocating rooms, especially meeting rooms, in one or more buildings comprises:
an interface I2, configured to
   - receive room information RI3 regarding a plurality of rooms in one or more buildings, wherein the room information RI3 comprises an availability indicator for each of the rooms, a capacity for each of the rooms, infrastructure information for each of the rooms, and a environmental current condition for each of the rooms;
   - receive planned meeting information PMI3 regarding a planned meeting in one or more buildings, wherein the planned meeting information PMI3 comprises a required time or timeframe, a required capacity, and a required infrastructure;
   - receive participant information PIS2, PID2 regarding a plurality of participants of the planned meeting, wherein the participant information PIS2, PID2 comprises a name, contact information, an availability indicator, and environmental comfort preference information for each of the respective participants;
an analytics engine AE2 configured to compute a compromise score CS corresponding to a best suitable room RA of the plurality of rooms based on the room information RI3, the planned meeting information PMI3, and the participant information PIS2, PID2 for each of the plurality of participants that accepted a meeting invitation; and
a sender module SM2 configured to send an identification of the allocated room to the computing devices (e.g. smart phone, laptop, tablet-computer, desktop computer) of the participants.
The participant information PIS, PID regarding participants can be static information PIS or dynamic information PID. The static information PIS can be provided to the server S3 for instance by registering the participant to the computerized room allocation system. The static information PIS can be provided to the server S3 by logging and analyzing the interactions of the respective participants with room setting equipment (e.g. setting a thermostat or a ventilation system).

The server S3 uses an analytics engine AE2 comprising machine learning algorithms (e.g. deep learning, artificial neural networks ANN2, pattern analysis, supervised algorithms SA2, or unsupervised algorithms USA2) to compute a compromise score CS for the participants who accepted to attend the meeting. The room RA which fits for most of the participants according to the compromise score is allocated. The information regarding the allocated room RA (location: room number, floor, building, etc.) is sent to the participants P via a sender module SM1 (e.g. a WLAN module). Advantageously computing the compromise score for the participants is performed shortly before the scheduled time of the meeting (e.g. 1 hour before). This enables that only those participants P who accepted to attend (means the persons which will really show up in the meeting) are taken into account when computing the compromise score CS. Advantageously the computerized system S2 is realized in a cloud infrastructure, e.g. as SaaS (Software as a Service).

Advantageously the server S3 is configured to send and to receive data or information via cable connection (e.g. LAN) and/or via wireless connections (e.g. WLAN) to respectively from computer devices (e.g. smartphones, tablet computers, workstations, PC, laptops, or even data bases or data base servers).

### Advantages of the invention:

a) Increased Productivity. The new dimension we consider when allocating meeting rooms takes into account an essential aspect of today's office work: productivity. According to numerous studies, productivity is strongly correlated with and determined by comfort and wellbeing in the office. By allocated the right rooms to office workers, we optimize the chances to leverage the best of their potential, thus supporting the business.
b) Space optimization. Our approach supports dynamic space allocation based on availability and personal preferences, thus making it possible to optimize the overall way of how building space is utilized. For instance, at times when room demand is low, parts of the building could already be turned to non-working hours operating mode, thus saving resources, e.g., energy.
c) Time savings. By enabling dynamic room allocation based on concrete calculations of optimum conditions for all participants, our approach saves time for meeting initiators or assistants, who otherwise have to take into account these particular requirements manually.
d) Improved tenant comfort and satisfaction. Tenants' comfort and satisfaction become increasingly important when it comes to renting out spaces, building value and the economics applied when calculating the rates. When meeting participants find the right conditions in their meeting rooms and do not have to worry about adjusting anything for their wellbeing, their comfort and satisfaction are naturally boosted.

To ensure productivity, especially deep learning on participants' behavior in meeting rooms is applied, as described in the scenario especially under steps 5 and 6.

As far as space optimization is concerned, especially the dynamic nature of allocating meeting rooms/office space supports this advantage, along with the machine learning algorithms for computing preferences exemplary specified under in steps 5 and 6 of the scenario illustrated in figure 2.

Time savings are especially possible thanks to the automation brought in by storing and computing data represented by human interventions in meeting rooms. These preferences are automatically inferred, thus eliminating the need of meeting planners to make assumptions and to proactively ask invited participants about their needs.

Improved tenant comfort and productivity are especially enabled by the deep learning methods applied on participants' behavior with regard to their interaction with meeting rooms over time.

Dynamic meeting room allocation method, based on personal participants' preferences inferred over time.

The paradigm of personalized spaces is becoming increasingly dominant in office environments, where workers demand perfect places fitting their individual needs.

The invention giving the building tenant/meeting participant a central role, using data analytics on his/her behavior to provide perfect places or at least perfectly optimized places, to address his/her productivity and comfort needs.

Optimizing space utilization in office buildings.

Dynamic meeting room allocation based on personal participants' preferences inferred over time is not only in line with the current market trends and needs, but also with the digitalization strategy in building automation, representing a concrete step towards giving building tenants perfect places.

The invention is also applicable for open office desk allocation in open office environments.

The advantages are provided by the inventive method, by the inventive system, or by the inventive server for allocating a room, especially a meeting room, in one or more buildings.

The inventive method, the inventive system, or the inventive server can also be used for allocating desks (especially in an open office), in one or more buildings.

Method and system for allocating a room, especially a meeting room, in one or more buildings, wherein information regarding rooms is provided to a room allocation system, wherein the information regarding rooms comprises the availability of rooms, the capacity of the rooms, and the infrastructure of the rooms; wherein information regarding a planned meeting is provided to the room allocation system, wherein the information regarding a planned meeting comprises the required time or timeframe, the required capacity, and the required infrastructure; wherein information regarding participants of a planned meeting is provided to the room allocation system, wherein the information regarding participants comprises name, contact information, availability, and comfort information for the respective participants; and wherein a compromise score is computed that gives the best suitable room to a group of participants, based on the information regarding rooms, based on the information regarding the planned meeting, and based on the comfort information of the respective participants by the room allocation system.

A further embodiment of the invention is a method for allocating desks (especially in an open office), in one or more buildings, the method comprising:
providing information regarding desks to a desk allocation system (e.g. computer system comprising adequate software programs), wherein the information regarding desks comprising: e.g. available desks, infrastructure of the desks, required timeframe, required infrastructure;
providing information regarding participants (user of desks) to the desk allocation system, wherein the information regarding participants comprising: name, contact information, availability, and comfort information (e.g. temperature, brightness, or air quality preferences) for the respective participants;
computing a compromise score that gives the best suitable desk to a participant or group of participants, based the information regarding desks and based on the comfort information (e.g. preferences) of the respective participants by the desk allocation system.

A further embodiment of the invention is also a room booking system for allocating rooms, especially meeting rooms, in one or more buildings, the room booking system comprising:
a server, comprising a processing unit, a memory, and a communication mechanism,
wherein the server is configured to receive information regarding rooms, wherein the information regarding rooms comprises: available rooms, capacity of the rooms, infrastructure of the rooms, required time, required capacity, required infrastructure;
wherein the server is further configured to receive information regarding participants, wherein the information regarding participants comprises: name, contact information, availability, and comfort information for the respective participant; and
wherein the server is further configured to compute a compromise score that gives the best suitable room to a group of people (participants), based the information regarding rooms and based on the comfort information (e.g. preferences) of the respective participants.
An advantageous embodiment of the invention is, that the desk allocation system, the room booking system, or the desk allocation system are realized in a cloud infrastructure.

The claimed methods, the allocation system or room booking system may be embodied in hardware, in a software module executed by a processor, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium.

Any steps of a method according to the present disclosure may be embodied in hardware, in a software module executed by a processor, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing the scope of the disclosure as defined by the following claims. It should also be understood that the disclosure is not restricted to the illustrated embodiments and that various modifications may be made within the scope of the following claims.

### Reference Signs

- ST1 - ST4: Step
- RAS1, RAS2: Room Allocation System
- C1 - C8: Computer Device
- P1 - Pn, P: Participants
- PMI1 - PMI3: Planned Meeting Information
- RI1 - RI3: Room Information
- PI1 - PIn: Participant Information
- PIS1, PIS2: Participant Information Static
- PID1, PID2: Participant Information Dynamic
- RA: Room Allocated
- S1 - S3: Server
- I1, I2: Interface
- CS: Compromise Score
- AE1, AE2: Analytics Engine
- USA1, USA2: Unsupervised Algorithm
- SA1, SA2: Supervised Algorithm
- ANN1, ANN2: Artificial Neural Network
- SM1, SM2: Sender Module
- DB: Data Base

## Claims

1. A method for allocating a room, especially a meeting room, in one or more buildings, the method comprising:
(ST1) providing room information (RI1 - RI3) regarding a plurality of rooms to a room allocation system (RAS1, RAS2), wherein the room information (RI1 - RI3) comprises an availability indicator for each of the rooms, a capacity for each of the rooms, infrastructure information for each of the rooms, and a environmental current condition for each of the rooms;
(ST2) providing planned meeting information (PMI1 - PMI3) regarding a planned meeting to the room allocation system (RAS1, RAS2), wherein the planned meeting information (PMI1 - PMI3) comprises a required time or timeframe, a required capacity, and a required infrastructure;
(ST3) providing participant information (PI1 - PIn, PIS1, PIS2, PID1, PID2) regarding a plurality of participants of the planned meeting to the room allocation system, wherein the participant information (PI1 - PIn, PIS1, PIS2, PID1, PID2) (1 - Pn, P) comprises a name, contact information, an availability indicator, and environmental comfort preference information for each of the respective participants;
(ST4) generating a compromise score (CS) corresponding to a best suitable room (RA) of the plurality of rooms based on the room information (RI1 - RI3), the planned meeting information (PMI1 - PMI3), and the participant information (PI1 - PIn, PIS1, PIS2, PID1, PID2) for each of the plurality of participants (1 - Pn, P) that accepted a meeting invitation by the room allocation system (RAS1, RAS2).

2. The method according to claim 1, wherein the environmental comfort preference information for each of the respective participants (1 - Pn, P) is provided directly to the room allocation system or room booking system (RAS1, RAS2).

3. The method according to one of the preceding claims 1 to 2, wherein the environmental comfort preference information (PI1 - PIn, PIS1, PIS2, PID1, PID2) for the respective participants (1 - Pn, P) is provided by analyzing the interaction of a participant (1 - Pn, P) with the room setting equipment.

4. The method according to one of the preceding claims 1 to 3, wherein a threshold for the compromise score (CS) is user defined.

5. The method according to one of the preceding claims 1 to 4, wherein the threshold for the compromise score (CS) is adjusted according to the respective invited participants (1 - Pn, P).

6. The method according to one of the preceding claims 1 to 5, wherein the step "generating a compromise score (CS)" determines the optimum values to fit the largest population of participants (1 - Pn, P).

7. The method according to one of the preceding claims 1 to 6, wherein the step "generating a compromise score (CS)" uses a user defined weighting of types of comfort information.

8. The method according to one of the preceding claims 1 to 7, wherein a specific room is allocated shortly before the meeting starting time.

9. The method according to one of the preceding claims 1 to 8, wherein a reminder regarding the scheduled meeting is sent to the participants (1 - Pn, P), wherein the reminder comprises the identification data of the specific allocated room (RA).

10. The method according to one of the preceding claims 1 to 9, wherein the step "generating a compromise score (CS)" is based on deep learning, artificial neural networks (ANN1, ANN2), pattern analysis, supervised algorithms (SA1, SA2), or unsupervised algorithms (USA1, USA2).

11. A non-transitory computer-readable medium or a computer program product containing in each case instructions which, when executed by a computer (S1 - S3), perform a method according to one of the claims 1 to 10.

12. A computerized system (RAS1, RAS2) for allocating rooms, especially meeting rooms, in one or more buildings, the system comprising:
a server (S1-S3), configured with hardware and software to act as a room allocating system,
wherein the server (S1-S3) is further configured to receive room information (RI1 - RI3) regarding a plurality of rooms in one or more buildings, wherein the room information (RI1 - RI3) comprises an availability indicator for each of the rooms, a capacity for each of the rooms, infrastructure information for each of the rooms, and a environmental current condition for each of the rooms;
wherein the server (S1-S3) is further configured to receive planned meeting information (PMI1 - PMI3) regarding a planned meeting in one or more buildings, wherein the planned meeting information (PMI1 - PMI3) comprises a required time or timeframe, a required capacity, and a required infrastructure;
wherein the server (S1-S3) is further configured to receive participant information (PI1 - PIn, PIS1, PIS2, PID1, PID2) regarding a plurality of participants of the planned meeting, wherein the participant information (PI1 - PIn, PIS1, PIS2, PID1, PID2) comprises a name, contact information, an availability indicator, and environmental comfort preference information for each of the respective participants (1 - Pn, P); and
wherein the server (S1-S3) is further configured to generate a compromise score (CS) corresponding to a best suitable room (RA) of the plurality of rooms based on the room information (RI1 - RI3), the planned meeting information (PMI1 - PMI3), and the participant information (PI1 - PIn, PIS1, PIS2, PID1, PID2) for each of the plurality of participants (1 - Pn, P) that accepted a meeting invitation.

13. The system according to claim 12, further comprising:
a computer device (C1, C3) for sending room information to the server (S1-S3).

14. The system according to one of the claims 13 or 14, further comprising:
communication devices (C5, DB) for sending participant information to the server (S1-S3).

15. A server (S1-S3) configured for allocating rooms, especially meeting rooms, in one or more buildings, the server comprising:
an interface (I1, I2), configured to
- receive room information (RI1 - RI3) regarding a plurality of rooms in one or more buildings, wherein the room information (RI1 - RI3) comprises an availability indicator for each of the rooms, a capacity for each of the rooms, infrastructure information for each of the rooms, and a environmental current condition for each of the rooms;
- receive planned meeting information (PMI1 - PMI3) regarding a planned meeting in one or more buildings, wherein the planned meeting information (PMI1 - PMI3) comprises a required time or timeframe, a required capacity, and a required infrastructure;
- receive participant information regarding a plurality of participants (1 - Pn, P) of the planned meeting, wherein the participant information (PI1 - PIn, PIS1, PIS2, PID1, PID2) comprises a name, contact information, an availability indicator, and environmental comfort preference information for each of the respective participants (1 - Pn, P);
an analytics engine (AE1, AE2) configured to compute a compromise score (CS) corresponding to a best suitable room (RA) of the plurality of rooms based on the room information (RI1 - RI3), the planned meeting information (PMI1 - PMI3), and the participant information (PI1 - PIn, PIS1, PIS2, PID1, PID2) for each of the plurality of participants (1 - Pn, P) that accepted a meeting invitation; and
a sender module (SM1, SM2) configured to send an identification of the allocated room to the computing devices of the participants (1 - Pn, P).
